Europäisches Patentamt

European Patent Office

Office européen des brevets

(11) Publication number: **0 356 645**
**A1**

# (12) EUROPEAN PATENT APPLICATION

(21) Application number: **89111608.9**

(22) Date of filing: **26.06.89**

(51) Int. Cl.⁵: **B07C 5/36**

(30) Priority: **28.07.88 IT 355388**

(43) Date of publication of application:
**07.03.90 Bulletin 90/10**

(84) Designated Contracting States:
**DE FR GB**

(71) Applicant: **AZIONARIA COSTRUZIONI
MACCHINE AUTOMATICHE-A.C.M.A.-S.p.A.
Via Cristoforo Colombo 1
I-40131 Bologna(IT)**

(72) Inventor: **Sogliani, Claudio
Via Savonarola, 45
I-46043 Cerese Di Virgilio Mantova(IT)**
Inventor: **Corniani, Carlo
Via Ferrari, 31
I-46045 Marmirolo Mantova(IT)**

(74) Representative: **Modiano, Guido et al
MODIANO, JOSIF, PISANTY & STAUB
Modiano & Associati Via Meravigli, 16
I-20123 Milano(IT)**

(54) **Apparatus for sorting products in multiple transfer lines directed from an advancement line.**

(57) An apparatus (1) for sorting products (2) in multiple transfer lines (6,7) directed from an advancement line (4) comprises: a rotating conveyor (4) for transferring the products (2) in succession; a cylindrical conveyor head (12) adapted to receive the products (2) in succession from the rotating conveyor (4); two further chain conveyors (6,7) having respective inlets adjacent to different exit regions of the cylindrical conveyor head (12); and means (11) for checking the conformity of the products (2) conveyed by the rotating conveyor (4). The cylindrical conveyor head (12) comprises pneumatic retention means (31) for the products (2) which are adapted to lead the defective products (2) towards the inlet of one of the two chain conveyors (6 or 7) and to make the normal products (2) advance toward the inlet of the other chain conveyor (6 or 7).

FIG.1

## APPARATUS FOR SORTING PRODUCTS IN MULTIPLE TRANSFER LINES DIRECTED FROM AN ADVANCEMENT LINE

The present invention relates to an apparatus for sorting products in multiple transfer lines directed from an advancement line.

Reference will be made in the following description to products such as bottles or similar containers handled by a filling machine without thereby limiting the generality of the invention.

In bottle-filling machines, checks related to certain characteristics of the finished products are usually performed.

In particular, such checks may be performed in order to determine whether the bottles have been filled correctly or whether they have any kind of flaw. Consequent to said checks, the filled and sealed bottles are conveyed by carousel conveyors along an advancement line and are sorted toward one of two paths defined by conveyor belts which respectively have the purpose of transporting the normal bottles to a further processing station and transporting the defective bottles to a rejection station.

The bottles are usually sorted toward one or the other of said two paths by means of a rotating conveyor which receives the bottles in succession from said carousel conveyors and can send them toward one of said conveyor belts in response to said checks. The known rotating conveyor is extremely complicated and expensive, since it comprises a plurality of clamp-like elements arranged along its periphery which receive the bottles and release them at the input end of one of the two conveyor belts. The clamps are opened and closed by cam mechanisms which act in different manners on said clamps consequent to the action of connecting mechanisms which are controlled by electronic actuation circuits.

The aim of the present invention is to provide an apparatus of the above described kind, comprising a rotating conveyor which is extremely simplified with respect to those provided in the described known devices.

According to the present invention, an apparatus is provided for sorting products in multiple transfer lines directed from an advancement line, said apparatus comprising: conveyor means which are part of said advancement line and are adapted to transfer said products in succession; sorting conveyor means for receiving in succession said products from said conveyor means; at least two further conveyors, constituting said transfer lines and having their respective inputs adjacent to different output regions of said sorting conveyor means; and means for checking certain characteristics of said products conveyed by said conveyor means, characterized in that said sorting conveyor means comprise pneumatic retention means for retaining said products and actuating means for said pneumatic retention means, said actuation means being controlled by said checking means, adapted to sort said products respectively to one or the other of said two further conveyors, depending on the characteristics detected by said checking means.

The present invention is now described only by way of non-limitative example with reference to the accompanying drawings, wherein:

figure 1 is a schematic plan view of a preferred embodiment of the apparatus according to the present invention;

figure 2 is a sectional view of a detail of the apparatus of figure 1;

figure 3 is a block diagram of an electric circuit for actuating the apparatus of figure 1; and

figure 4 is a block diagram of an electric circuit for actuating two different embodiments of the apparatus of figure 1.

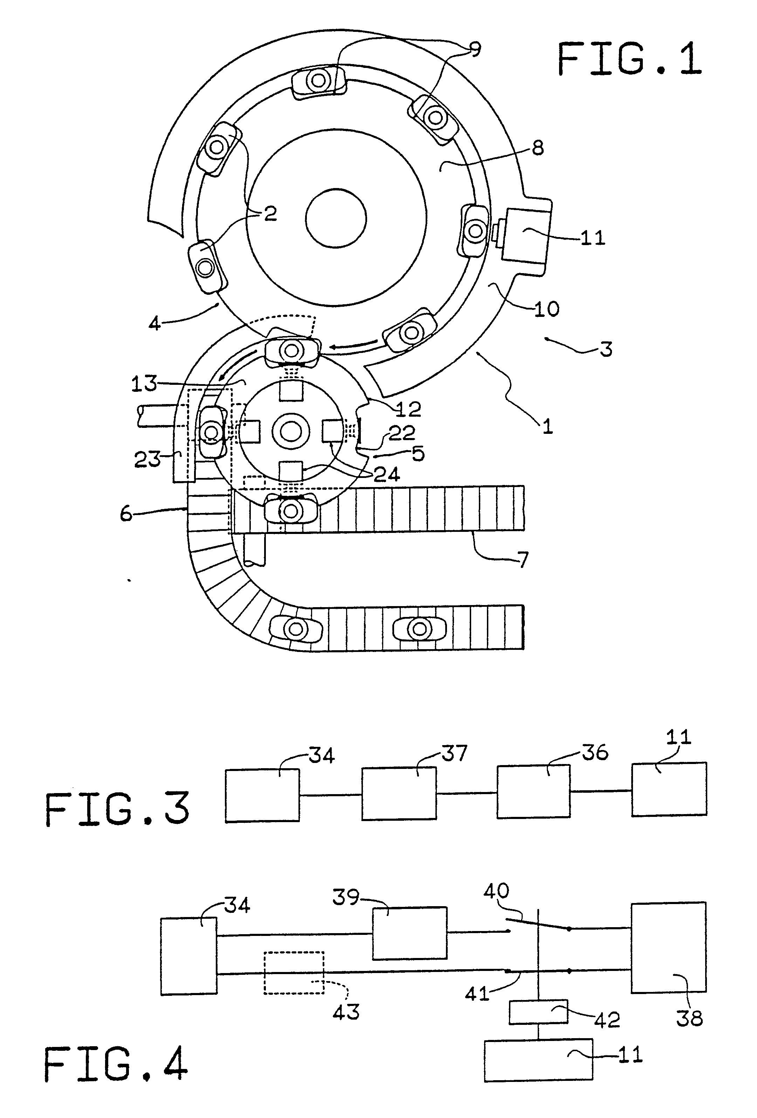

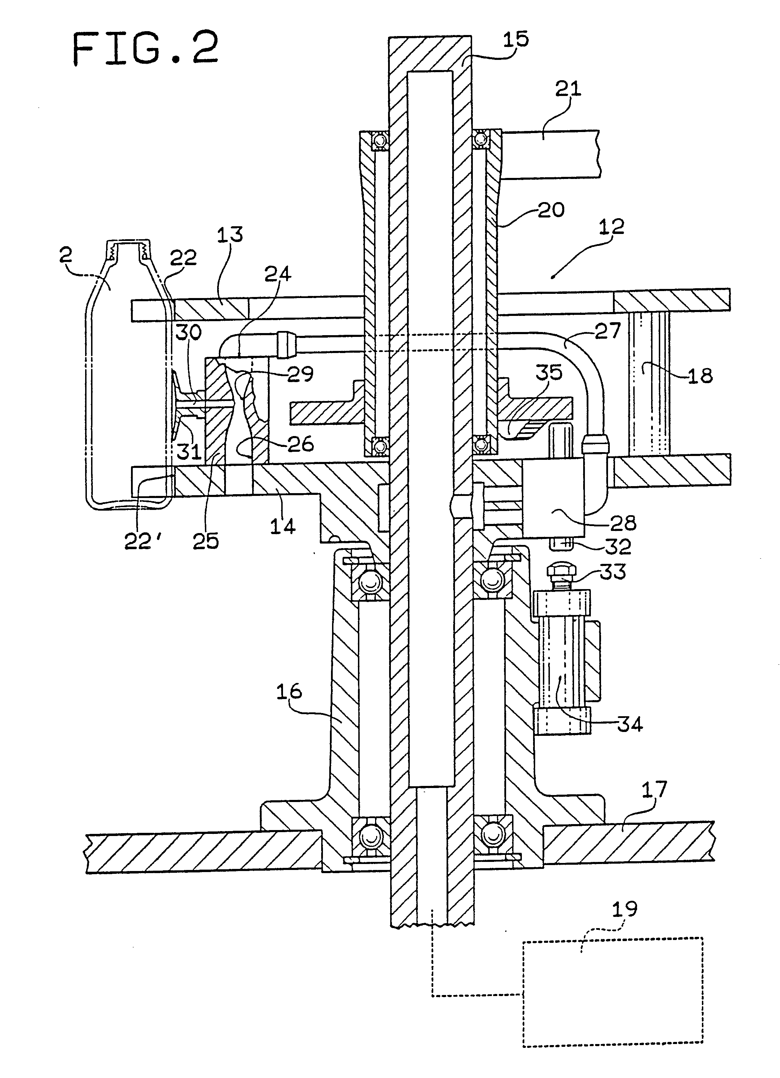

With reference to figure 1, the reference numeral 1 generally indicates an apparatus for transferring products constituted for example by bottles 2; said apparatus is a part of a filling machine which is only partially illustrated and generally indicated by the reference numeral 3.

The transfer apparatus 1 comprises an advancement line defined by a rotating conveyor 4 which transfers along a circular path bottles 2 fed thereto in a known and not illustrated manner, and releases them onto a rotating sorting conveyor 5 adapted to transfer said bottles 2 in a selective manner toward one of two transfer lines defined respectively by horizontal chain conveyors 6 and 7 which are laterally flexible and are arranged substantially side by side.

The rotating conveyor 4 essentially comprises a drum 8 with a vertical axis which rotates clockwise (with reference to figure 1) and has, on its periphery, a plurality of equidistantly spaced seats 9, each adapted to accommodate one bottle 2. The periphery of the drum 8 is flanked by a curved fixed guide 10 which keeps the bottles 2 within the seats 9 during their transfer on the part of the conveyor 4. When the bottles 2 reach the seats 9, they are already filled with liquid, and while they are accommodated within the seats 9 they are closed (in a not illustrated manner) and checked, by means of a known checking device schematically indicated by a block 11, to check certain characteristics thereof, such as their correct filling and regular shape.

The sorting conveyor 5 comprises a substantially cylindrical conveyor head 12 which rotates in the opposite direction with respect to the conveyor 4 and is substantially tangential thereto.

Said chain conveyor 6 is adjacent to a region of the conveyor head 12 which is arranged, with reference to the direction of rotation of said head 12, upstream of the region in which the chain conveyor 7 is adjacent to said head.

According to what is illustrated in particular in figure 2, the conveyor head 12 comprises two horizontal disks 13 and 14, the first disk 13 being arranged above the second one. The disk 14 is keyed to a vertical hollow shaft 15 which is rotated by motor means (not illustrated) and is rotatably supported by means of a sleeve 16 rigidly associated with a horizontal wall 17 which is a part of the base of the filling machine 3; the disk 13 is coaxial to the disk 14 and is connected thereto by means of a plurality of vertical uprights or columns 18 (of which only one is illustrated in figure 2).

The lower end of the hollow shaft 15 leads to a pump means, which may be constituted by a compressed-air source such as, e.g., a compressor, schematically indicated by a block 19. An upper portion of the hollow shaft 15 overlying the disk 13 is rotatably accommodated within a sleeve 20 rigidly associated with a horizontal bracket 21 connected to the base of the machine 3.

The disks 13 and 14 are provided, along their periphery, with an equal number of respective equidistantly spaced seats 22 and 22' which are vertically aligned in pairs so as to define housings for the bottles 2 arriving from the seats 9 of the rotating conveyor 4.

The conveyor head 12 is flanked, along one of its portions comprised between the region in which it is substantially tangential to the rotating conveyor 4 and an input region of the chain conveyor 6, by a fixed guide 23 which keeps the bottles 2 within the housings defined by the seats 22 and 22'.

A number of suction elements 24, four of which are illustrated by way of example in figure 1, are rigidly associated with the upper surface of the disk 14 and are superimposed thereon; said elements are equal in number to the number of seats 22' provided on said disk 14 and each element 24 is arranged adjacent to a respective seat 22' proximate to the hollow shaft 15. Each of said suction elements 24 essentially comprises a block 25 which is internally traversed by a vertical duct 26; the lower end of said duct is connected to the environment and its upper end is connected, by means of a duct 27, to a valve element 28 (only one whereof is illustrated in figure 2) rigidly associated with the disk 14 in an opposite region of the shaft 15. Each duct 26 is in the shape of a Venturi tube and has an intermediate crimp or neck like portion 29 which is connected, by means of a duct 30 defined in the related block 25, with a retention means which comprises a sucker 31 arranged with its grip portion facing one of said housings for bottles 2 defined between two superimposed seats 22 and 22'.

Each valve element 28 is constituted by a bistable valve and has its inlet connected to the inner cavity of the shaft 15 and its outlet connected to the upper end of one of the ducts 26 provided in said blocks 25. The switching means of each valve element 28 are constituted by a vertical shaft 32 which traverses said valve element 28 and is adjacent, at its own lower end, to the upper end of a vertical shaft 33 which constitutes the output element of a linear actuator or control means 34 rigidly associated with the sleeve 16 below the disk 14. Said sleeve 20 coaxially supports, above said valve elements 28, a cam 35 the profile whereof engages, for purposes which will become apparent hereafter, the upper ends of the shafts 33, so as to exert thereon, at given instants, a downward axial thrust.

According to what is illustrated in figure 3, the device 11 for checking the conformity of the bottles 2 is connected to a switching block 36 capable of activating said linear actuator 34 by means of a known delay circuit 37.

In operation, the bottles 2 conveyed within the seats 9 of the rotating conveyor 4 reach, in succession, the housings defined on the conveyor head 12 by said pairs of superimposed seats 22 and 22'. If the sucker 31 which faces each bottle 2 does not provide suction, said bottle 2 moves in contact with the guide 23 and exits from the related housing defined by two superimposed seats 22 and 22' at the inlet end of the chain conveyor 6, which transfers the normal bottles 2 to further processing stations which are not illustrated.

If a bottle 2 conveyed within a seat 9 of the rotating conveyor 4 is found defective by the checking device 11, said device sends a signal to the switching block 36, which activates the delay circuit 37. After the defective bottle 2 has advanced along a path of preset length and after the checking device 11 within the related seat 9 and within a housing defined by two superimposed seats 22 and 22', the delay circuit 37 activates the linear actuator 34, raising the shaft 32 and thus connecting the inner cavity of the shaft 15 to the duct 26 related to the sucker 31 which faces the defective bottle 2 to be rejected.

As a consequence of the onset of this connection, the sucker 31 associated with said duct 26 starts to exert a sucking action, since said sucker, as mentioned, is connected to the crimp of a Venturi tube at which the pressure is lower than the atmospheric pressure.

The defective bottle 2 therefore does not leave the conveyor head 12 at the inlet end of the chain conveyor 6 but remains within the housing defined by the related pair of seats 22 and 22' until it reaches the inlet end of the chain conveyor 7. When the bottle reaches said position, the shaft 32 related to the valve element 28 associated with the sucker 31 which retains the defective bottle 2 is returned to its lowered position by a raised portion provided on the profile of the cam 35, so that the connection between the sucker 31 and the inner cavity of the shaft 15 is interrupted. The defective bottle 2, no longer retained by said sucker 31, thus moves onto the chain conveyor 7, which transports it to a collection and rejection station (not illustrated).

According to a variation of the present invention, illustrated in figures 2 and 4, each valve element 28 is provided so as to keep the duct 26 in communication with the inner cavity of the shaft 15 when its shaft 32 is in lowered position.

With reference to figure 4, the actuator 34 is connected to a device 38 for emitting signals of the cyclic type, capable of momentarily activating said actuator 34 upon the arrival of each bottle 2 carried by a pair of seats 22 and 22' at the region at which the conveyors 4 and 5 are substantially tangential. The connection between the actuator 34 and the emitter 38 is provided by means of two electric lines arranged in parallel; a known delay block 39 and a normally open switch 40 are arranged along one of said lines, and a normally-closed switch 41 is arranged along the other one. The open and closed condition of said two switches 40 and 41 may be modified by the action of said checking device 11 which, when it detects a defective bottle 2, sends a signal by means of a delay block 42, said signal being capable of closing the switch 40 and opening the switch 41 for a preset duration after a predefined time.

In operation, each of the bottles 2 which reach the region of substantial tangency between the rotating conveyor 4 and the sorting conveyor 5 is taken in succession by a sucker 31, which exerts suction since the shaft 32 of the related valve element 28 is in its lowered position. In the absence of a signal arriving from the checking device 11, each normal bottle 2 which reaches the region whereat the inlet end of the chain conveyor 6 is arranged is transferred thereto, by virtue of the signal sent by the emitter 38 to the actuator 34 every time a bottle 2 arrives in said region and by virtue of the consequent lifting of the related shaft 33, which interrupts the suction through the related sucker 31.

If the checking device 11 detects the passage of a defective bottle 2, it sends a signal to the delay element 42; said signal is capable of producing, immediately before the defective bottle 2 arrives at the inlet portion of the chain conveyor 6, the opening of the switch 41 and the closure of the switch 40, causing the passage of the first cyclic signal emitted by the emitter 38 through the delay block 39. After a preset time, sufficient to allow the defective bottle 2 to arrive at the inlet portion of the chain conveyor 7, said signal activates the actuator 34, which raises the shaft 32 of the valve element 28 associated with the defective bottle 2 and thus interrupts the suction exerted through the related sucker 31. As a consequence of this, the faulty bottle 2 can enter the path defined by the chain conveyor 7.

In this embodiment, the guide 23 may be eliminated, since, in the portion of the path defined thereby, the bottles 2 remain inserted in their respective housings, defined by two superimposed seats 22 and 22', as an effect of the suction of the suckers 31.

The defective bottles 2 may naturally be sent by the conveyor head 12 onto the conveyor 6, under the action of the suckers 31, and the bottles 2 which are normal may be directed to the conveyor 7 under the action of the suckers 31. This result may be obtained by using a control circuit of the kind illustrated in figure 4, in which the emitter 38 activates the actuator 34 by means of a delay element 43 illustrated in broken lines when each normal bottle 2 reaches the inlet region of the chain conveyor 7, and the delay elements 39 and 42 are provided so as to activate the actuator 34 when the defective bottles 2 reach the inlet region of the chain conveyor 6.

According to a further aspect of the described apparatus 1, the bottles 2 found defective by the checking device 11 may be transferred by the conveyor head 12 toward the chain conveyor 6 without the suckers 31 acting thereon, while the bottles 2 which are devoid of defects may be passed to the chain conveyor 7 by virtue of the cooperation of the suckers 31.

This can be obtained by using a control circuit such as the one illustrated in figure 3, and by providing valve elements 28 which are normally in such a condition as to keep the duct 26 connected to the inner cavity of the shaft 15. In this case, all of the regular bottles 2 are directed by the suckers 31 to the conveyor 7 while, upon the checking device 11 detecting a defective bottle 2, it deactivates the sucker 31 related to said defective bottle 2 by means of the delay element 37, consequently directing it to the conveyor 6.

From what has been described it is evident that the described apparatus 1 is capable of transferring the bottles 2 to one or the other of the chain conveyors 6 and 7 according to specific characteristics detected by the checking device 11.

It is furthermore evident that the described apparatus 1 is simple and economical with respect to the devices described with reference to the known art.

Obviously, the apparatus described herein is susceptible to numerous modifications and adaptations, without thereby departing from the purview of the instant inventive concept.

Thus, for example, it should be finally noted that as an alternative to what has been described said ducts 26 may have a cylindrical inner cross section and they may be connected, through the related valve elements 28, to a pump means 19 constituted by a suction pump rather than to said compressed-air source.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for sorting products in multiple transfer lines directed from an advancement line, comprising: conveyor means which are part of said advancement line and are adapted to transfer said products in succession; sorting conveyor means for receiving said products in succession from said conveyor means; at least two further conveyors, constituting two of said transfer lines, having their respective inputs adjacent to different outlet regions of said sorting conveyor means; and means for checking certain characteristics of said products conveyed by said conveyor means, characterized in that said sorting conveyor means (5) comprise pneumatic retention means (31) for retaining said products (2), actuation means (34) being provided for said pneumatic retention means (31), said actuation means being controlled by said checking means (11) which are adapted to sort said products (2) respectively to one or the other of said two further conveyors (6, 7), according to the characteristics detected by said checking means (11).

2. Apparatus according to claim 1, characterized in that said sorting conveyor means (5) comprise a substantially cylindrical conveyor head (12) provided with a plurality of said pneumatic retention means (31) arranged radially and equidistantly spaced, said actuation means comprising actuator means (34) for varying, under the influence of said checking means (11), the position of a bistable valve (28) connected with one of its outputs to a respective one of said retention means (31) and with one of its inputs to pump means (19) capable of exerting suction 11 through said retention means (31).

3. Apparatus according to claim 2, characterized in that said retention means comprise suction means (31) connected, by means of said bistable valve (28), to a crimp (29) in a duct (26) which is internally in the shape of a Venturi tube, one end of said duct (26) being connected to said pump means (19), said pump means (19) being constituted by a compressed-air source.

4. Apparatus according to claim 2, characterized in that said retention means comprise sucker means (31) connected through said bistable valve (28) to said pump means (19), said pump means (19) being constituted by a suction pump.

5. Apparatus according to any one of the preceding claims, characterized in that one of said two further conveyors (6, 7) constitutes a rejection line for defective products.

FIG.1

FIG.3

FIG.4

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 084 299 (HEMEX INC.) <br> * Zusammenfassung; Figuren * <br> --- | 1,2,9 | A 61 F 2/24 |
| A | WO-A-8 605 383 (BOKROS) <br> --- | | |
| D,A | EP-A-0 275 951 (BRAUN MELSUNGEN) <br> ----- | | |

RECHERCHIERTE SACHGEBIETE (Int. Cl.4)

A 61 F

Der vorliegende Recherchenbericht wurde für alle Patentansprüche erstellt

| Recherchenort | Abschlußdatum der Recherche | Prüfer |
|---|---|---|
| DEN HAAG | 16-11-1989 | STEENBAKKER J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0403)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 113 231 (DATZ) * Figure 1; page 10, lines 15-19; page 7, lines 3-29 * | 1-2,5 | B 07 C 5/36 |
| A | | 3-4 | |
| X | GB-A-2 094 254 (SAINT-GOBAIN) * Page 3, lines 60-63; figures * | 1 | |
| A | EP-A-0 118 857 (TAKEDA CHEMICAL) * Figure 1; abstract * | 1-4 | |
| A | US-A-4 651 879 (M. HARRIS) * Column 3, lines 38-41; figure 1 * | 1-2 | |

TECHNICAL FIELDS
SEARCHED (Int. Cl.5)

B 07 C`

The present search report has been drawn up for all claims

| Place of search | Date of completion of the search | Examiner |
|---|---|---|
| THE HAGUE | 23-11-1989 | HENROTTE I. |

EPO FORM 1503 03.82 (P0401)